# EUROPÄISCHE PATENTSCHRIFT

(11) **EP 1 389 045 B1**
(45) Veröffentlichungstag und Bekanntmachung des Hinweises auf die Patenterteilung: **08.09.2004**
(21) Anmeldenummer: 02750939.7
(22) Anmeldetag: 16.05.2002
(51) Int. Cl.: A22C 17/00

(54) **VORRICHTUNG ZUR HERSTELLUNG VON LEBENSMITTELSPIESSEN, INSBESONDERE VON SCHASCHLIKSPIESSEN UND DERGLEICHEN**
DEVICE FOR THE PRODUCTION OF FOOD KEBABS, IN PARTICULAR OF SHISH KEBABS AND SIMILAR
DISPOSITIF DE PRODUCTION DE BROCHETTES ALIMENTAIRES, EN PARTICULIER DE BROCHETTES DE TYPE CHACHLIK ET ANALOGUES

(30) Priorität: 17.05.2001 DE 10124119
(43) Veröffentlichungstag der Anmeldung: 18.02.2004
(73) Patentinhaber: Völkl, Thomas, 83052 Bruckmühl (DE)
(72) Erfinder: Völkl, Thomas, 83052 Bruckmühl (DE)
(74) Vertreter: Flach, Dieter Dipl.-Phys.
(86) Internationale Anmeldenummer: PCT/EP2002/005421
(87) Internationale Veröffentlichungsnummer: WO 2002/091839

(56) Entgegenhaltungen:
- EP-A- 0 865 733
- US-A- 3 835 761
- US-A- 5 740 722
- US-A- 6 161 471

## Beschreibung

Die Erfindung betrifft eine Vorrichtung zur Herstellung von Schaschlikspießen und dergleichen. Eine derartige Vorrichtung ist aus US-A-5 740 722 bekannt.

Die Herstellung von Lebensmittelspießen, z.B. von Schaschlikspießen, von Obstspießen, oder z.B. von mit einem Spieß gehaltenen mehrlagigen Partycrackern und dergleichen erfolgt auch heute noch in großem Umfang manuell. In der Regel werden von einer Person entsprechende Fleischwürfelstücke in einer Rinne bereitgestellt, wobei z.B. von einer zweiten Person dann jeweils in dem Abstand zwischen zwei Fleischwürfeln eine Kombination aus Paprika und Zwiebeln zugegeben wird. Die gesamte Lebensmittelmenge, in der Regel bestehend aus 5 Fleischstückchen und dazwischen vier Paprika-/Zwiebel-Kombinationen, wird dann mittels eines Holzspießes möglichst mittig aufgespießt. Dabei ist es wünschenswert, dass das Fleisch und die Paprika bzw. das Fleisch und die Zwiebel sich selbst nicht berühren, da dies ansonsten zu einer Verfärbung des Fleisches oder der Zwiebel bereits in kürzester Zeit führt, so dass dies bei der Bereitstellung in Verkaufsregalen als kaufhemmend durch die Verbraucher beurteilt wird.

Aufgabe der vorliegend Erfindung ist es von daher eine Vorrichtung zur Herstellung von Schaschlikspießen zu schaffen, bei der mit einfacheren Mitteln eine möglichst kontinuierliche Herstellung von Schaschlikspießen möglich ist.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Die erfindungsgemäße Vorrichtung zur Herstellung von Schaschlikspießen umfasst im wesentlichen zwei Drehachsen, auf welchen mehrere Befüllungsscheiben drehbar aufgesetzt sind. Die Befüllungsscheiben weisen in Außenumfangsrichtung verlaufend versetzt liegende Befüllungskammern auf, wobei in die jeweilige Drehscheibe auf der einen Drehachse beispielsweise nur die Fleischstückchen in die Befüllungskammern fortlaufend eingegeben werden. Bezüglich der auf der anderen Drehachse parallel nebeneinander sitzenden Drehscheiben wird in die darin vorgesehenen Befüllungskammern die Paprika-/Zwiebelkombination eingefüllt. Dies kann durch zwei oder mehrere sich gegenüberstehende Arbeitskräfte erfolgen. Die gesamte Anordnung ist derart, dass die Befüllungskammern für die Fleischstückchen letztlich in Axialrichtung betrachtet versetzt liegen zu den Befüllungskammern für die Paprika-/Zwiebelkombination der jeweils anderen Scheiben. Dabei kommen bei aufeinander zu erfolgter, langsamer Rotation der jeweiligen Scheibenkombinationen die befüllten Kammern in Axialrichtung hintereinander zu liegen, so dass in dieser Lage dann vorzugsweise automatisch ein Spieß durch die gesamten, mit den betreffenden Lebensmittel befüllten Kammern hindurchgesteckt werden kann. Bei weiterem Fortdrehen kann dann der so vollständig hergestellte Schaschlikspieß nach unten hin mit Radialkomponente aus den Kammern ausfallen.

In einer bevorzugten Ausführungsform der Erfindung sind die Befüllungskammern einseitig offen und einseitig in Axialrichtung geschlossen, wobei an der geschlossenen Wand jedoch ein radialförmiger Schlitz eingebracht ist, der in einer Höhe endet, in der der Holzspieß nach dem Einstecken durch die Fleisch-Paprika-Zwiebel-Kombination zu liegen kommt.

Jede der Bestückungs- oder Befüllungsscheiben kann eine mit geringem Durchmesser versehene Distanzscheibe umfassen, mit der sie gemeinsam dreht. Bevorzugt ist jedoch jeweils zwischen zwei Befüllungsscheiben eine separate, auf den Drehachsen aufsitzbare Distanzscheibe angeordnet, deren Dicke der Dicke der Befüllungskammern der jeweils gegenüberliegenden Befüllscheibe entspricht.

Um die erwähnten Befüllungskammern zumindest auf der axialen Seite zu begrenzen, auf der kein Radialschlitz zum seitlichen Herausführen des mit den Fleischstückchen und Paprika-Zwiebel-Kombinationen bestückten Spießes vorgesehen ist, ist ferner eine nicht rotierende, konkave Leiste vorgesehen, d.h. eine ringförmige oder teilringförmige Scheibe. Dadurch wird der Abstandsraum in radialer Höhe der Befüllungskammern zwischen zwei Befüllungsscheiben verschlossen, so dass von einer Bedienungsperson immer nur die Kammern mit den entsprechen Lebensmittelteilen befüllt werden können. Gleichzeitig können die Lebensmittelteile durch die in einer Stirnseitenrichtung offenen Befüllungskammern nicht herausfallen, da die Befüllungskammern durch die erwähnte ringförmige Zwischenleiste seitlich geschlossen sind. Diese Zwischenleiste reicht bevorzugt unter Ausbildung eines radial wirkenden Befüllkeiles nur bis in jenen Bereich, in welchem die radial nach außen hin offenen Befüllungskammern mit der Umfangsfläche der auf der jeweils anderen Drehachse sitzenden Distanzscheibe zusammenlaufen. Mit der erfindungsgemäßen Vorrichtung ist es beispielsweise auch problemlos möglich in die Befüllungskammern kleine Würstchen zu geben, die dann ebenso problemlos bei Bedarf sogar in Längsrichtung aufgespießt werden können.

Anstelle der erläuterten Bestückungs- und/oder Distanzscheiben kann noch eine Anordnung nach Art von Bändern oder Trumen vorgesehen sein, die entsprechend mit Bestückungskammern versehen sind. Entsprechend der erläuterten Anzahl von Bestückungsscheiben wäre dann eine entsprechende Anzahl von Bestückungsbändern vorgesehen. Zwischen diesen könnten ebenfalls feststehende teilkreisförmige Leisten oder andere Einrichtungen zu dem gleichen Zweck und dem gleichen Ziel vorgesehen sein. Die Trumen oder Bänder könnten dann über einfache, drehende Scheiben, die auf den erwähnten Drehachsen drehen, umgelenkt werden. Sollten feststehende Scheiben verwendet werden, so sollten die Bestückungsbänder über den Umfangsmantel der Scheiben hinweg fortbewegt werden können (wenn die Reibung nicht zu groß ist; ansonsten könnten entlang der Umfangsfläche noch eine die Reibung verringernde Gleit- oder Rollenlagerung vorgesehen sein). Die Funktionsweise der Bestückung dieser Bänder, die Befüllungskammern aufweisen, wäre ansonsten völlig vergleichbar. Dies gilt auch für den Aufspießvorgang der Lebensmittel.

Um eine möglichst hohe Genauigkeit während des Aufspießvorgangs zu realisieren, ist bevorzugt ein parallel zum Spieß bewegbarer Führungsstab vorgesehen, der bevorzugt vor dem eigentlichen Aufspießvorgang zunächst durch entsprechende Axialbohrungen durch die Befüllungsscheiben oder -bänder hindurch erfolgt, um dann in einem zweiten nachfolgenden Schritt den Spieß entsprechend auszufahren und durch alle Hohlkammern hinweg durchzuführen, um die darin eingebrachten Lebensmittel aufzuspießen.

Ganz allgemein wird angemerkt, dass abweichend von dem erläuterten Ausführungsbeispiel jedwede Lebensmittel aufgespießt werden können, z.B. auch Fischstückchen oder beispielsweise Bauchspeck, dazu Obst oder Obstteile u.s.w. Beliebigste Lebensmittelkombinationen können mit der Vorrichtung auf einem Spieß verbunden werden.

Weitere Vorteile und Einzelheiten der Erfindung ergeben sich nachfolgend aus dem anhand von Zeichnungen dargestellten Ausführungsbeispiel. Dabei zeigen im einzelnen:
- Figur 1a :: eine schematische perspektivische Darstellung zum Herstellen von Lebensmittelspießen in geöffnetem Zustand bei abgenommenen Bestückungs- und Distanzscheiben;
- Figur 1b :: eine zu Figur 1a entsprechende Darstellung in betriebsfertigen Zustand mit einer auf einer Auflagestange aufgesetzten, dach-förmigen Fingerschutz;
- Figur 2 :: eine schematische perspektivische Darstellung zweier zusammenwirkender Befüllungsscheiben mit aufgesetzter Zwischenleiste vor dem Zusammenbau;
- Figur 3 :: eine zu Figur 2 entsprechende Darstellung, wenn die Teile auf die Drehachsen aufgesetzt sind;
- Figur 4 :: eine entsprechende Darstellung zu Figur 3, bei welcher eine weitere Bestückungs- und eine weitere Distanzscheibe aufgesetzt sind;
- Figur 5 :: eine axiale Frontansicht auf das Ausführungsbeispiel nach Figur 4;
- Figur 6 :: eine vergrößerte Schnittdarstellung längs der Linie A-A in Figur 5;
- Figur 7 :: eine vergrößerte Detaildarstellung eines Ausschnitts aus Figur 3;
- Figur 8 :: eine entsprechende Darstellung zu Figur 7, jedoch in einem anderen Blickwinkel;
- Figur 9 :: eine vergrößerte Detaildarstellung bezüglich Figur 4 oder 5; und
- Figur 10 :: eine perspektivische Darstellung der Vorrichtung zur Herstellung von Schaschlikspießen mit allen aufgesetzten Bestückungs- und Distanzscheiben sowie teilringförmigen Leisten.

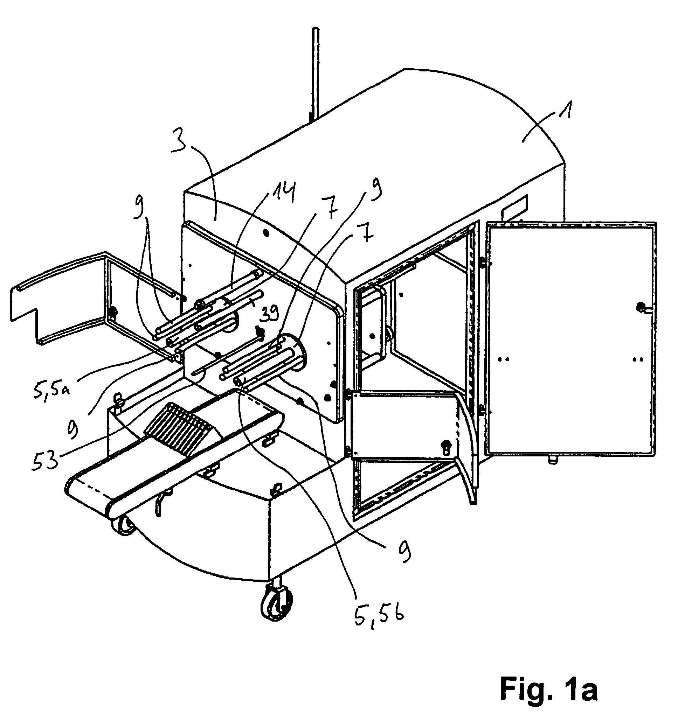

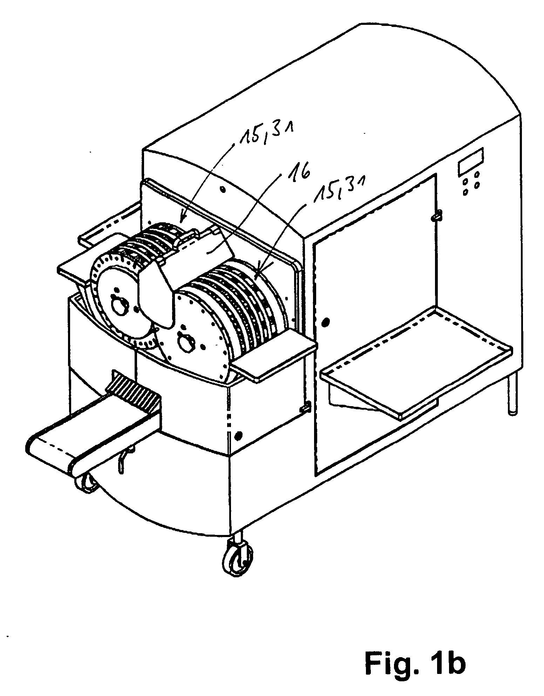

In Figuren 1a und 1b ist in schematischer Darstellung die Vorrichtung zur Herstellung von Schaschlikspießen mit einem Gehäuse 1 gezeigt, in welchem neben der Antriebseinrichtung für die Drehachsen u.a. auch eine Vereinzelungsvorrichtung zur Vereinzelung von bereitgehaltenen Spießen sowie eine Spießeinheit zur Durchführung des Spießvorgangs untergebracht sind, auf die im folgenden nicht näher eingegangen wird.

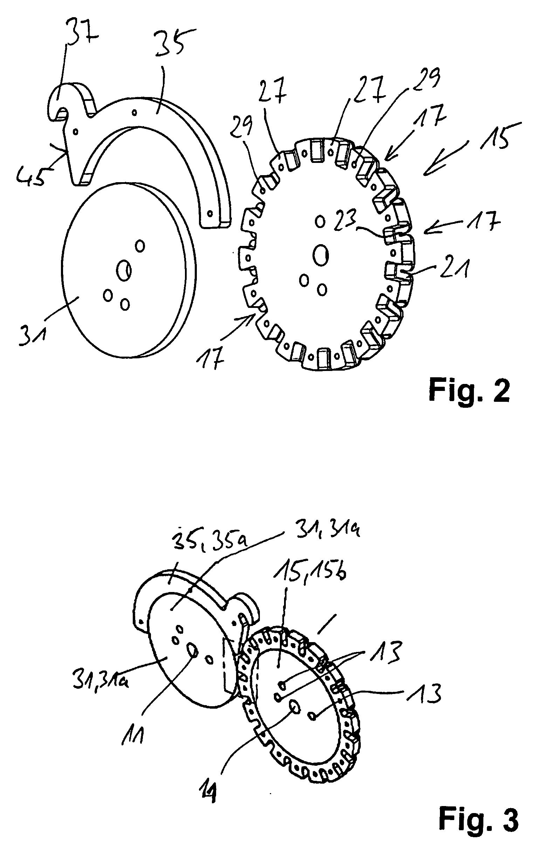

An der Frontseite 3 des Gehäuses sind horizontal versetzt zueinander liegend zwei parallele Drehachsen 5 vorgesehen, nämlich eine erste Drehachse 5a und eine zweite Drehachse 5b. Mit den Drehachsen mit rotierend sind frontseitig am Gehäuse ausgebildete Drehteller 7 vorgesehen, an welchen jeweils drei Antriebs- und Sicherheitsstäbe 9 parallel zur Drehachse 5 ausgerichtet vorgesehen sind. Diese jeweils beiden Antriebs- und Sicherheitsstäbe 9 dienen dazu die einzelnen, nachfolgend noch erläuterten Drehscheiben funktionsrichtig auf die Achsen 5 aufzustecken, wozu die anhand der nachfolgenden Figuren erläuterten Drehscheiben neben einer Drehachsenbohrung 11 noch entsprechend versetzt liegende Antriebs- und Sicherheitsöffnungen 13 aufweisen. Die anhand der Figuren 2 ff gezeigten Scheiben können also immer nur in einer Ausrichtung aufgesetzt werden, wobei die Antriebs- und Sicherheitsstäbe 9 an den beiden Drehtellern 7 für die beiden Drehachsen 5 in unterschiedlichen Lagen und entsprechend auch die Bohrungen 13 in den Drehscheiben unterschiedlich eingebracht sein können, wodurch die einen vorgesehenen Drehscheiben nur auf die eine Drehachse 5a und die für die andere Drehachse 5b vorgesehenen Drehscheiben nur dort funktionsrichtig aufgesteckt werden können.

Auf einer Auflagestange 14 kann im betriebsfertigen Zustand gemäß Figur 1b noch eine dachförmige Fingerschutzeinrichtung 16 aufgesetzt werden.

Anhand von Figur 2 ist in perspektivischer Darstellung eine erste Befüllungs- oder Bestückungsscheibe 15 dargestellt, die nachfolgend teilweise auch als Bestückungsscheibe 15b bezeichnet wird, da sie zum Aufstecken für die in Figur 1 rechts liegende Drehachse 5b geeignet ist. Diese Bestückungsscheibe 15 bzw. 15b weist am Außenumfang versetzt liegende Bestückungskammern 17 auf. Die Bestückungskammern 17 sind radialseitig offen, wobei die in Umfangsrichtung verlaufenden Begrenzungswände nach außen hin unter Ausbildung eines bogenförmigen Abschnittes 19 die radiale Einstecköffnung erweitern.

Im gezeigten Ausführungsbeispiel ist die jeweilige Bestückungskammer 17 in axialer Ausrichtung an einer Seite offen. An der gegenüberliegenden Seite ist die Bestückungskammer 17 durch eine Kammerwand 21 zumindest teilweise verschlossen, und zwar unter Zurücklassung eines radialen Spaltes 23, der in Radialrichtung ebenfalls unter Ausbildung von bogenförmigen Abschnitten 25 sich erweitert.

Zwischen den so gebildeten Bestückungskammern 17 ist in den zahnradähnlichen Zwischenwandabschnitten 27 noch jeweils eine axiale Durchtrittsöffnung 29 ausgebildet, auf die später noch eingegangen wird.

Eine so gebildete Bestückungskammer 17 wird also beispielsweise auf die rechte Drehachse 5b aufgeschoben, so dass die Drehachse sowie die entsprechenden Antriebs- und Sicherheitsstäbe 9 die entsprechende Drehachsbohrung 11 sowie die Antriebs-/Sicherheitsöffnung 13 durchragen.

In axialer Höhe der so aufgesteckten ersten Bestückungsscheibe 15 wird auf der zweiten Drehachse 5a dann eine Distanzscheibe 31 aufgesetzt, die von ihren Durchtrittsöffnungen auf die Drehachse 5a bzw. Antriebs- und Sicherheitsstäbe 9 abgestimmte Bohrungen aufweist. Der Durchmesser dieser Distanzscheibe 31 ist so bemessen, dass deren Außenumfang gerade bis zum Außenumfang der auf der zweiten Drehachse 5b aufgesteckten Bestückungsscheibe 15, also an die Umfangsflächen der zahnradähnlichen Zwischenwandabschnitte 27 reicht. Während in Figur 2 dazu die auf der einen Drehachse aufgesetzte Bestückungsscheibe 15 und die damit zusammenwirkende Distanzscheibe 31 in getrenntem Zustand vor ihrem Einbau auf den jeweiligen Drehachsen gezeigt ist, gibt Figur 3 die relative Lage der beiden Scheiben zueinander im eingebauten Zustand wieder.

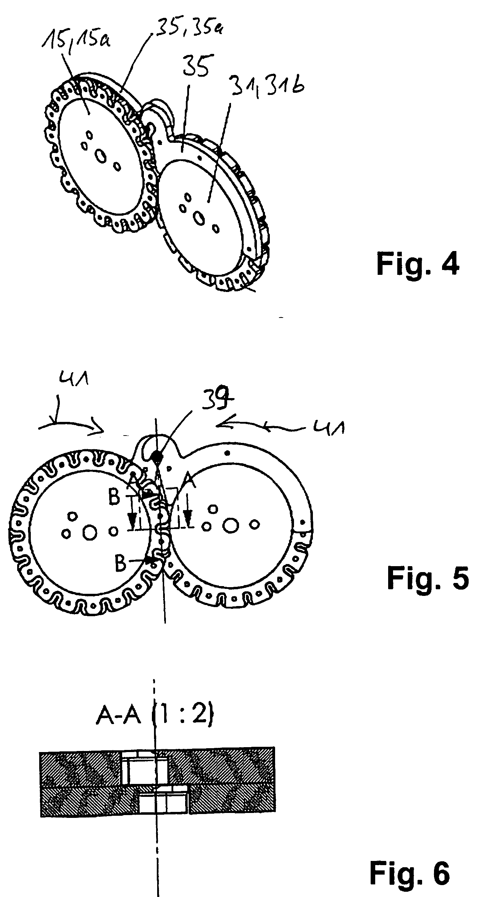

Als nächstes wird auf die Distanzscheibe 31, d.h. die Distanzscheibe 31a eine für diese Drehachse 5a vorgesehene Bestückungsscheibe 15a aufgesetzt, wohingegen auf die weitere zweite Drehachse 5b vor der dort bereits aufgesteckten Bestückungsscheibe 15b nunmehr eine entsprechende Distanzscheibe 31b aufgesteckt wird. Es ergibt sich dann im wesentlichen die Darstellung gemäß Figur 4, wobei jeweils die Bestückungskammern 17 der einen Bestückungsscheibe 15 in axialer Höhe der auf der zweiten Drehachse 5 aufgesteckten Distanzscheibe 31 liegen.

Aus den Figuren 2 bzw. 4 ist auch ersichtlich, dass auf die jeweilige Distanzscheibe 31 eine teilkreisförmige Zwischenleiste 35 aufgesetzt wird, deren konkaver Innenrand der zylinderförmigen Umfangsfläche der Distanzscheibe 31 entspricht. Diese teilkreisförmige Zwischenleiste 35 weist jeweils einen Haken oder eine Nase 37 auf, mit welcher sie in einem parallel zur Drehachse von der maschinenseitigen Frontseite 3 fest vorstehenden Verankerungsstab 39 aufgesteckt wird. Die teilkreisförmigen Zwischenleisten rotieren nicht. Durch diese teilkreisförmigen Zwischenleisten 35 werden während des Bestückungsvorganges die Bestückungskammern 17 an der Seite, an der die Bestückungskammern 17 an sich mit keiner abschließenden Wand versehen sind, seitlich verschlossen.

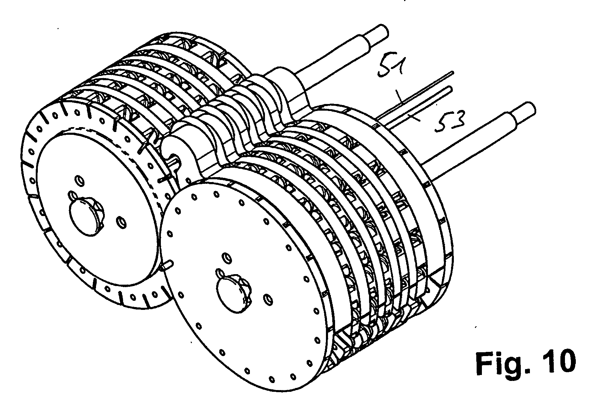

In entsprechender weiter abwechselnder Folge nunmehr immer auf eine Distanzscheibe eine betreffende Bestückungsscheibe und auf eine Bestückungsscheibe eine betreffende Distanzscheibe aufgesetzt und zwar wechselweise, wie anhand von Figuren 2 bis 4 erläutert ist. Bei der Herstellung eines Schaschlikspießes sind dazu auf der Drehachse 5a sechs axial beabstandete Bestückungsscheiben 15a mit Bestückungskammern 17 vorgesehen, die während des Betriebes manuell von der Bedienperson mit Fleischstückchen befüllt werden. Auf der zweiten Drehachse 5b sind demgegenüber beispielsweise fünf Bestückungsscheiben 15b mit entsprechenden Bestückungskammern 17 angeordnet, die von einer weiteren Bedienungsperson während des Betriebes mit Paprika-/Zwiebelkombinationen befüllt werden. Die komplett zusammengebaute Vorrichtung mit allen Bestückungs- und Distanzscheiben sowie den zugehörigen teilkreisförmigen Zwischenleisten ist in Figur 10 wiedergegeben. Mit einem derartigen Aufbau lässt sich also ein Schaschlikspieß herstellen, und zwar durch Zusammenstecken des Inhalts von z.B. elf Befüllungskammern, wodurch beispielsweise sechs Fleischstückchen und in den fünf dazwischen befindlichen Abständen fünf Paprika-/Zwiebel-Kombinationen zusammengesteckt werden können. Die axiale Dicke der Bestückungsscheiben 15, beispielsweise zum Befüllen mit Fleisch oder auch zum Befüllen mit Paprika-/Zwiebeln kann unterschiedlich groß sein, wobei dann jeweils nur die auf der gegenüberliegenden Drehachse angeordnete Distanzscheibe eine entsprechende Dicke aufweisen muss. Durch die Dicke der jeweiligen mit dem Radialschlitz 23 versehenen Kammerwände 21 wird zudem gewährleistet, dass die Hohlräume der Bestückungskammern 17 der auf der ersten wie der zweiten Drehachse 5a, 5b aufgesetzten Bestückungsscheiben jeweils um die Dicke dieser Kammerwände 21 getrennt zu einander zu liegen kommen, so dass letztlich die Fleischstückchen auf dem Spieß unter Einhaltung eines axialen Abstandes entsprechend der Stärke der Kammerwand 21 benachbart zu den Paprika-/Zwiebel-Kombinationen zu liegen kommen.

Während des Betriebes werden also die Drehachsen 5a und 5b entsprechend der Pfeildarstellung 41 (Figur 5) aufeinander zu bewegt. Die Rotationsgeschwindigkeit soll so gewählt werden, dass für jede der beidseitig von den Drehscheiben Bedienpersonen die von ihm jeweils zu befüllenden Befüllungskammern problemlos befüllt werden können. Die eine Bedienperson befüllt dabei die Befüllungskammern nur mit Fleisch, die andere gegenüberstehende Bedienperson die anderen Befüllungskammern der anderen Drehscheiben nur mit den Paprika-/Zwiebel-Kombinationen.

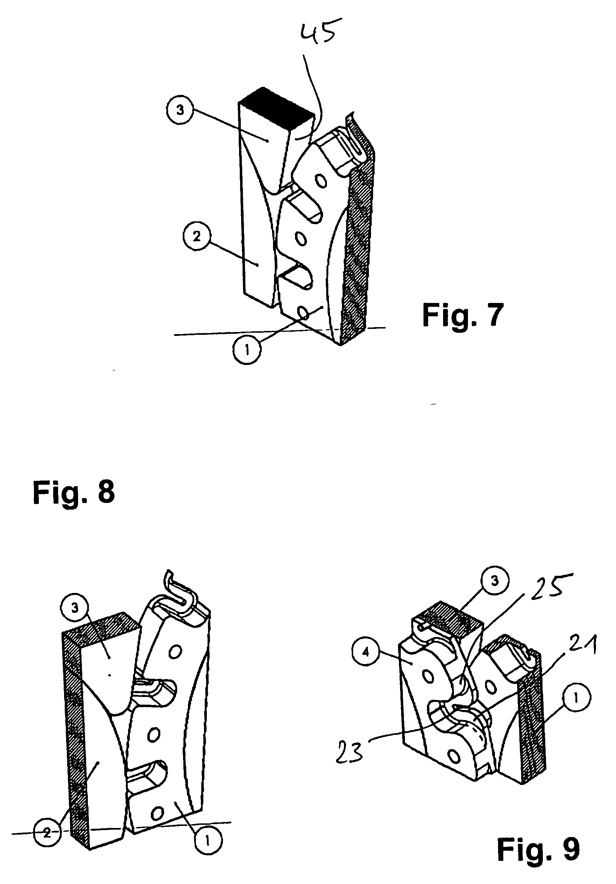

Während der langsamen weiteren Rotationsbewegung kommt dann die radial freistehende Bestückungsöffnung, aus welcher gegebenenfalls noch Teile des bestückten Fleisches oder der Paprika-/Zwiebel-Kombinationen radial herausstehen, auf eine Auflauffläche oder -kante 45 der gegenüberliegenden teilkreisförmigen Zwischenleiste, wobei diese Auflauffläche 45 in Seitendarstellung jeweils zwischen der Außenumfangsfläche der mit den Bestückungskammern 17 versehenen Drehscheibe und in gleicher Axialhöhe auf der anderen Drehachse angeordneten Distanzscheibe 31 in Berührung oder fast in Berührung kommt. Dadurch werden überstehende Lebensmittelteile völlig in die Bestückungskammern 17 hineingedrückt (Figur 2 und Figur 7).

Die gesamte Anordnung ist also derart, dass die befüllten Kammern in Axialansicht im mittleren Bereich deckungsgleich hintereinander zu liegen kommen, so dass abwechselnd die an der einen Bestückungsscheibe 15 ausgebildeten und mit Fleisch befüllten Bestückungskammern 17 und die Bestückungskammern 17 der an der zweiten Drehachse vorgesehenen Bestückungsscheiben 15 axial hintereinander liegen. In dieser Situation wird durch eine Vorschuböffnung in der Frontseite 3 des Gehäuses 1 der Vorrichtung automatisch gesteuert ein Spieß 51 herausgeführt und durch die Fleisch-/Paprika-/Zwiebelstückchen parallel zu den Drehachsen 5 hindurch gesteckt. Um die Herausführung des Spießes taktgestalt zum richtigen Zeitpunkt vorzunehmen, sind die erwähnten axialen Durchtrittsöffnungen 29 in den zahnradähnlichen Zwischenwandabschnitten 27 vorgesehen. Denn zusammen mit dem Spieß wird maschinenseitig ein Führungsstab 53 aus der Maschine heraus bewegt. Die gesamte Anordnung ist dabei derart, dass zu dem Zeitpunkt, an dem die Lebensmittelteile aufgespießt werden sollen, alle axialen Durchtrittsöffnungen 29 axial fluchtend in ihrer mittleren Position angeordnet sind. Parallel zu diesem Führungsstift 53 wird also darüber liegend der Spieß 51 herausgeführt und durch die in den Befüllungskammern liegenden Lebensmittel hindurchgesteckt, wobei der Spieß einmal am Ende der radialförmigen Spalten 23 der jeweils maschinenseitigen Kammerwände 21 durch die Bestückungskammern 17 hineingesteckt und durch die gegenüberliegend offenen Wände während des Aufspießvorganges hindurchbewegt wird.

Die Fleischstückchen und die Paprika-/Zwiebel-Kombinationen sind also nunmehr durch den Spieß fest miteinander verbunden. Während der weiteren Rotationsbewegung der Drehscheiben kommen die radialen Bestückungsöffnungen nach unten wieder zunehmend freier zu liegen, wobei dadurch gleichzeitig der vollständig bestückte Spieß nach unten Hin herausfällt.

Um über die Bestückungsöffnung nach oben hin überstehende Lebensmittel eventuell tiefer in die Bestückungskammer hineinzuschieben, kann ggf. auch noch ein separater getaktet betätigbarer Schieber vorgesehen sein, der vor dem Aufspießvorgang die Lebensmittel tiefer in die Bestückungskammern hineinschiebt. Es können aber auch andere Einrichtungen mit dem gleichen Ziel vorgesehen sein. Da von daher die einzelnen Bestückungskammern in der Regel tiefer ausgestaltet sind und dies grundsätzlich notwendig ist, also nicht zwingend der gesamte Raum einer jeweiligen Bestückungskammer mit einem Lebensmittel voll ausgefüllt sein muss, ergibt sich auch die in Figur 6 wiedergegebene Darstellung, bei der der Spieß scheinbar nicht zentral die Bestückungskammern durchsetzt. Die in die Bestückungskammern hineingesteckten Lebensmittel werden aber während des Aufspießvorgangs dabei in der Regel mehr oder weniger zentral durchbohrt.

## Patentansprüche

1. Vorrichtung zur Herstellung von Schaschlikspießen und dergleichen **gekennzeichnet durch** die folgenden Merkmale:
- es sind zwei parallel und seitlich beabstandet angeordnete Dreh- oder Umlenk- oder Zentrierachsen (5; 5a, 5b) vorgesehen,
- auf den beiden Dreh-, Umlenk- oder Zentrierachsen (5; 5a, 5b) sind
a) Bestückungsscheiben (15) drehbar angeordnet oder ausgebildet, und/oder
b) es sind umlaufende Bestückungsbänder vorgesehen, die um Scheiben laufen oder drehen, die auf den beiden Dreh-, Umlenk- oder Zentrierachsen (5; 5a, 5b) angeordnet sind,
- die Bestückungsscheiben oder -bänder (15) weisen in Radialrichtung hin offene und in Umfangsrichtung versetzt liegende Bestückungskammern (17) zum Befüllen von Lebensmitteln, insbesondere von Fleischstückchen und/oder Gemüse-stückchen auf,
- die Bestückungsscheiben oder -bänder(15) sind auf den beiden Dreh-, Umlenk- oder Zentrierachsen (5a, 5b) so angeordnet, dass die Bestückungskammern (17) der auf der einen Dreh-, Umlenk- oder Zentrierachse (5a) angeordneten Bestückungsscheiben oder -bänder (15) axial versetzt liegen zu den Bestückungskammern (17), die in der auf der anderen Dreh-, Umlenk- oder Zentrierachse (5b) befindlichen Bestückungsscheiben oder -bänder (15) vorgesehen sind, und
- die auf den Bestückungsscheiben oder -bändern (15) umlaufenden Bestückungskammern (17) kommen zumindest in einer Rotations- und/oder Fortbewegungsstellung jeweils in Axialrichtung hintereinander so zu liegen, dass in dieser Situation ein Spieß (51) axial **durch** die hintereinander liegenden Bestückungskammern (17) hindurchführbar und **dadurch** die in den Bestückungskammern (17) befindlichen Lebensmittelteile auf dem Spieß (51) aufspießbar sind.

2. Vorrichtung nach Anspruch 1, **dadurch gekennzeichnet, dass** jeweils in axialer Höhe einer Bestückungsscheibe oder eines Bestückungsbandes (15) auf der dazu jeweils anderen Dreh-, Umlenk- oder Zentrierachse (5a, 5b) eine Distanzscheibe und/oder -einrichtung (31) vorgesehen ist, deren Außenumfang zumindest in einem Teilumfangsbereich ganz oder fast bis an den Außenumfang der mit den Bestückungskammern (17) versehenen Bestückungsscheibe (15) reicht.

3. Vorrichtung nach Anspruch 2, **dadurch gekennzeichnet, dass** die Distanzscheibe oder -einrichtung (31) eine separate rotierende Scheibe ist.

4. Vorrichtung nach Anspruch 2, **dadurch gekennzeichnet, dass** die Distanzscheibe (31) als axial vorstehender Scheibenansatz an einer Bestückungsscheibe (15) ausgebildet bzw. mit dieser fest verbunden ist.

5. Vorrichtung nach einem der Ansprüche 1 bis 4, **dadurch gekennzeichnet, dass** der Überlappungsbereich der Bestückungsscheiben (15) bei axialer Ansicht parallel zu den Dreh-, Umlenk- oder Zentrierachsen (5; 5a, 5b, 5c) in etwa der radialen Höhe der Bestückungskammern (17) entspricht.

6. Vorrichtung nach einem der Ansprüche 1 bis 5, **dadurch gekennzeichnet, dass** die Bestückungskammern (17) in Axialrichtung zumindest an einer Seite der Bestückungsscheibe (15) oder des Bestückungsbandes eine Kammerwand (21) aufweisen, wobei diese Kammerwand zumindest von einem mittleren Bereich der Bestückungskammern (17) ausgehend einen mit Radialkomponente, vorzugsweise mit sich nach außen hin in Umfangsrichtung erweiternder Radialkomponente verlaufenden Schlitz aufweist.

7. Vorrichtung nach einem der Ansprüche 1 bis 6, **dadurch gekennzeichnet, dass** zumindest eine in Axialrichtung liegende Seite der Bestückungskammern (17) offen ist.

8. Vorrichtung nach einem der Ansprüche 1 bis 7, **dadurch gekennzeichnet, dass** ferner eine teilkreisförmige Zwischenleiste (35) vorgesehen ist, die jeweils nicht rotierend auf der Distanzscheibe (31) aufgesetzt ist.

9. Vorrichtung nach Anspruch 8, **dadurch gekennzeichnet, dass** die teilkreisförmige Zwischenleiste (35) eine axiale Dicke aufweist, die der axialen Dicke der damit zusammenwirkenden und auf der jeweils anderen Dreh-, Umlenk- oder Zentrierachse (5; 5a, 5b) sitzenden Bestückungsscheibe (15) bzw. des umlaufenden Bestückungsbandes entspricht.

10. Vorrichtung nach Anspruch 8 oder 9, **dadurch gekennzeichnet, dass** die teilkreisförmige Zwischenleiste (35) eine teilkreisförmige Außenumfangsfläche aufweist, die in Höhe der mit den radialen Bestückungsöffnungen versehenen Umfangsfläche der benachbart sitzenden Bestückungsscheibe (15) endet.

11. Vorrichtung nach einem der Ansprüche 1 bis 10, **dadurch gekennzeichnet, dass** während der Rotations- bzw. Fortbewegung der Bestückungsscheiben und/oder -bändern (15) die radial liegende Bestückungsöffnung auf eine Auflauffläche (45) aufläuft bzw. damit zusammenwirkt, wodurch gegebenenfalls über die radiale Bestückungsöffnung hinausstehende Lebensmittelteile in die Bestückungskammern (17) hineingedrückt werden.

12. Vorrichtung nach Anspruch 10 oder 11, **dadurch gekennzeichnet, dass** die Auflauffläche (45) an der teilkreisförmigen Zwischenleiste (35) ausgebildet ist.

13. Vorrichtung nach einem der Ansprüche 1 bis 12, **dadurch gekennzeichnet, dass** die zwischen den Bestückungskammern (17) verbleibenden zahnradähnlichen Zwischenwandabschnitte (27) an den Bestückungsscheiben (15) mit einer axialen Durchtrittsbohrung (29) versehen sind, die in der Aufspießposition axial miteinander fluchten.

14. Vorrichtung nach Anspruch 13, **dadurch gekennzeichnet, dass** während des Aufspießvorganges ein Spieß (51) in Axialrichtung durch alle axial hintereinander liegenden Bestückungskammern (17) aller Bestückungsscheiben (15) maschinell hindurchgeführt wird, wobei der Spieß die in der jeweils einen Kammerwand (21) der Bestückungskammern (17) eingebrachten radialen Schlitze (23) druchragt.

15. Vorrichtung nach einem der Ansprüche 1 bis 14, **dadurch gekennzeichnet, dass** während des Aufspießvorganges der durch die Bestückungskammern (17) hindurch gesteckte Spieß (51) durch einen parallel zu ihm verlaufenden Führungsstab (47) kontrolliert bewegt wird, wobei der Führungsstab (47) durch die in der Aufspießposition axial hintereinander fluchtenden Durchtrittsöffnungen (39) in den zahnradähnlichen Zwischenwandabschnitten bewegt wird.

16. Vorrichtung nach Anspruch 15, **dadurch gekennzeichnet, dass** zunächst der Führungsstab (47) durch die fluchtenden Durchtrittsöffnungen (39) in den Zwischenwandabschnitten bewegbar ist, und erst nachfolgend, zumindest seitlich versetzt, der Spieß durch die Bestückungskammern (17) hindurch bewegbar ist.

17. Vorrichtung nach einem der Ansprüche 1 bis 16, **dadurch gekennzeichnet, dass** die Dicke der Kammerwände (21) dem freien Axialabstand der auf dem Spieß aufgespießten Lebensmittel entspricht.

## Claims

1. A device for producing shish kabobs and the like, **characterized in that**:
- two rotation or deflection or centering axes (5; 5a, 5b) are provided and arranged parallel to and laterally spaced apart from one another,
- the two rotation or deflection or centering axes (5; 5a, 5b) contain
a) delivery disks (15) that are rotatably arranged or formed thereon and/or
b) revolving delivery bands are provided which revolve or turn around disks arranged on the two rotation or deflection or centering axes (5; 5a, 5b),
- the delivery disks or bands (15) contain delivery chambers (17) that are open in the radial direction and offset in the circumferential direction, wherein said delivery chambers are filled with foods, particularly with pieces of meat and/or vegetables,
- the delivery disks or bands (15) are arranged on the two rotation or deflection or centering axes (5a, 5b) in such a way that the delivery chambers (17) of the delivery disks or bands (15) arranged on one rotation or deflection or centering axis (5a) lie axially offset to the delivery chambers (17) of the delivery disks or bands (15) arranged on the other rotation or deflection or centering axis (5b), and
- the revolving delivery chambers (17) of the delivery disks or bands (15) lie behind one another in the axial direction in at least one rotating or advancing position such that a spit (51) can be axially inserted into the successively positioned delivery chambers (17) in this position and the pieces of food situated in the delivery chambers (17) can be skewered on the spit (51).

2. The device according to Claim 1, **characterized in that** a spacer disk and/or spacer device (31) is respectively arranged on the other rotation or deflection or centering axis (5a, 5b) at the axial height of a delivery disk or delivery band (15), wherein the outer circumference of said spacer disk or spacer device extends up to or nearly up to the outer circumference of the delivery disk (15) provided with the delivery chambers (17) over at least part of its circumference.

3. The device according to Claim 2, **characterized in that** the spacer disk or spacer device (31) consists of a separate rotating disk.

4. The device according to Claim 2, **characterized in that** the spacer disk (31) is realized in the form of an axially protruding projection of a delivery disk (15) or rigidly connected thereto.

5. The device according to one of Claims 1-4, **characterized in that** the overlapping region of the delivery disks (15) approximately corresponds to the radial height of the delivery chambers (17) if viewed in the axial direction parallel to the rotation or deflection or centering axes (5; 5a, 5b, 5c).

6. The device according to one of Claims 1-5, **characterized in that** the delivery chambers (17) contain an axial chamber wall (21) at least on one side of the delivery disk (15) or the delivery band, wherein this chamber wall contains a slot that originates from at least a central region of the delivery chamber (17) and extends with a radial component, preferably with a radial component that widens outward in the circumferential direction.

7. The device according to one of Claims 1-6, **characterized in that** at least one axial side of the delivery chambers (17) is open.

8. The device according to one of Claims 1-7, **characterized in that** an intermediate element (35) in the form of a ring segment is respectively placed on the spacer disks (31) in a non-rotating fashion.

9. The device according to Claim 8, **characterized in that** the intermediate element (35) in the form of a ring segment has an axial thickness that corresponds to the axial thickness of the cooperating delivery disk (15) or the revolving delivery band situated on the other rotation or deflection or centering axis (5; 5a, 5b).

10. The device according to Claim 8 or 9, **characterized in that** the intermediate element (35) in the form of a ring segment has an outer circumferential surface that has the shape of a ring segment and ends at the height of the circumferential surface of the adjacently positioned delivery disk (15) provided with the radial delivery openings.

11. The device according to one of Claims 1-10, **characterized in that** the radially positioned delivery opening comes in contact and cooperates with a contact surface (45) during the rotating or advancing movement of the delivery disks and/or bands (15), namely such that pieces of food that, if applicable, protrude over the radial delivery opening are pressed into the delivery chambers (17).

12. The device according to Claim 10 or 11, **characterized in that** the contact surface (45) is arranged on the intermediate element (35) in the form of a ring segment.

13. The device according to one of Claims 1-12, **characterized in that** the gear-like intermediate wall sections (27) on the delivery disks (15) which remain between the delivery chambers (17) are provided with axial through-bores that are axially aligned with one another in the skewering position (29).

14. The device according to Claim 13, **characterized in that** a spit (51) is axially inserted in a mechanized fashion through all delivery chambers (17) of all delivery disks (15) which lie axially behind one another during the skewering process, wherein the spit extends through the radial slots (23) arranged in the respective chamber walls (21) of the delivery chambers (17).

15. The device according to one of Claims 1-14, **characterized in that** the spit (51) that is inserted through the delivery chambers (17) during the skewering process is moved under the control of a guide rod (47) that extends parallel to the spit, wherein the guide rod (47) is moved through the through-openings (39) in the gear-like intermediate wall sections which are aligned axially behind one another in the skewering position.

16. The device according to Claim 15, **characterized in that** the guide rod (47) initially can be moved through the aligned through-openings (39) in the intermediate wall sections, and **in that** the spit can only be moved through the delivery chambers (17) subsequently in an at least laterally offset fashion.

17. The device according to one of Claims 1-16, **characterized in that** the thickness of the chamber walls (21) corresponds to the free axial distance between the foods skewered on the spit.

## Revendications

1. Dispositif de fabrication de piques pour brochettes et analogue, **caractérisé par** les propriétés suivantes :
- deux axes de rotation ou de renversement ou de centrage (5 ; 5a , 5b) disposés en parallèle et latéralement distancés,
- sur les deux axes de rotation, de renversement ou de centrage (5 ; 5a, 5b), on a prévu
a) des disques à équiper (15) disposés ou conçus de façon rotative et/ou
b) on a prévu des bandes de chargement qui fonctionnent autour de disques et qui sont disposées sur les deux axes de rotation, de renversement ou de centrage (5 ; 5a ; 5b),
- les disques ou les bandes de chargement (15) sont munis de chambres de chargement (17) ouvertes en direction radiale et déportées en direction périphérique, pour le remplissage d'aliments, notamment de morceaux de viandes et/ou de dés de légumes,
- les disques ou les bandes de chargement (15) sont disposés sur les deux axes de rotation, de renversement ou de centrage (5a, 5b), de façon à ce que les chambres de chargement (17) des disques ou des bandes d'équipement (15) disposés sur l'un des axes de rotation, de renversement ou de centrage (5a) soit décalées en direction axiale par rapport aux chambres de chargement (17) qui sont prévues dans les disques ou les bandes de chargement (15) situées sur l'autre axe de rotation, de renversement ou de centrage (5b) et
- dans une position de déplacement en rotation et/ou en éloignement, les chambres de chargement (17) périphériques sur les disques ou les bandes de chargement (15) se placent de façon telle l'un derrière l'autre en direction axiale, que dans cette situation une brochette (51) puisse être insérée à travers les chambres de chargement (17) situées les unes derrière les autres, ce qui permet d'embrocher les pièces d'aliments situées dans les chambres de chargement (17) sur la brochette (51).

2. Dispositif selon la revendication 1, **caractérisé en ce que** respectivement en hauteur axiale d'un disque de chargement ou d'une bande de chargement (15), on a prévu respectivement sur l'autre axe de rotation, de renversement ou de centrage (5a, 5b) un disque et/ou un dispositif d'écartement (31) dont la périphérie extérieure aboutit au moins dans une zone périphérique partielle, soit totalement ou partiellement jusqu'à la périphérie du disque de chargement (15) muni des chambres de chargement (17).

3. Dispositif selon la revendication 2, **caractérisé en ce que** le disque ou le dispositif d'écartement (31) est un disque en rotation séparée.

4. Dispositif selon la revendication 2, **caractérisé en ce que** le disque d'écartement (31) est conçu sous la forme d'un embout de disque saillant en direction axiale sur un disque de chargement (15) ou qu'il est fixement relié à ce dernier.

5. Dispositif selon l'une quelconque des revendications 1 à 4, **caractérisé en ce qu'**en vue axiale, la zone de chevauchement des disques de chargement (15) à la parallèle des axes de rotation, de renversement ou de centrage (5 ; 5a ; 5b, 5c) correspond à environ la hauteur radiale de la chambre de chargement (17).

6. Dispositif selon l'une quelconque des revendications 1 à 5, **caractérisé en ce qu'**en direction axiale, les chambres de chargement (17) sont munies au moins sur un côté du disque de chargement (15) ou de la bande de chargement d'une paroi de chambre (21), cette paroi de chambre étant munie à partir d'au moins une zone centrale des chambres d'équipement (17) d'une fente s'étendant avec des composantes radiales, de préférence avec des composantes radiales s'élargissant vers l'extérieur, en direction périphérique.

7. Dispositif selon l'une quelconque des revendications 1 à 6, **caractérisé en ce qu'**au moins un côté de la chambre de chargement (17) situé en direction axiale est ouverte.

8. Dispositif selon l'une quelconque des revendications 1 à 7, **caractérisé en ce qu'**on a prévu par ailleurs, une baguette intermédiaire (35) en forme de cercle divisé qui est respectivement placée de façon non rotative sur le disque d'écartement (31).

9. Dispositif selon la revendication 8, **caractérisé en ce que** la baguette intermédiaire en forme de cercle divisé (35) présente une épaisseur axiale qui correspond à l'épaisseur axiale du disque de chargement (15) coopérant avec elle et logé sur respectivement l'autre axe de rotation, de renversement ou de centrage (5 ; 5a ; 5b) du disque ou de la bande de chargement périphérique.

10. Dispositif selon l'une quelconque des revendications 8 ou 9, **caractérisé en ce que** la baguette intermédiaire (35) en forme de cercle divisé présente une surface périphérique extérieure en forme de cercle divisé qui se termine à hauteur de la surface périphérique munie des orifices de chargement radiaux du disque de chargement (15) logé dans le voisinage.

11. Dispositif selon l'une quelconque des revendications 1 à 10, **caractérisé en ce que** pendant le déplacement en rotation ou en éloignement des disques et/ou des bandes de chargement (15), l'orifice de chargement situé en direction radiale s'échoue sur une surface de démarrage (45) ou coopère avec cette dernière, ce qui a pour effet le cas échéant de presser des pièces d'aliments extérieurs à l'intérieur des chambres de chargement (17), par l'intermédiaire des orifices de chargement radiaux.

12. Dispositif selon l'une quelconque des revendications 10 ou 11, **caractérisé en ce que** la surface de démarrage (45) est conçue sur la baguette (35) en forme de cercle divisé.

13. Dispositif selon l'une quelconque des revendications 1 à 12, **caractérisé en ce que** les sections de parois intermédiaires (27) analogues à des roues dentées subsistant entre les chambres de chargement (17) sont munies d'un orifice de passage axial (29) qui en position d'embrochage sont alignés les uns sur les autres en direction axiale.

14. Dispositif selon la revendication 13, **caractérisé en ce qu'**au cours de l'opération d'embrochage, une brochette (51) est introduite de façon mécanique en direction axiale à travers toutes les chambres de chargement (17) situées les unes derrière les autres en direction axiale de tous les disques de chargement (15), la brochette traversant les fentes radiales (23) ménagées dans respectivement la paroi de chambre (21) de la chambre de chargement (17).

15. Dispositif selon l'une quelconque des revendications 1 à 14, **caractérisé en ce qu'**au cours de l'opération de chargement, la brochette (51) insérée à travers les chambres de chargement (17)est déplacée de façon contrôlée par une barre de guidage (47) s'étendant en parallèle, la barre de guidage (47) étant mise en mouvement dans les sections de paroi intermédiaire analogues à des roues dentées à travers les orifices de passage (39) alignés les uns derrière les autres en direction axiale, en position d'embrochage.

16. Dispositif selon la revendication 15, **caractérisé en ce que** d'abord la barre de guidage (47) est déplaçable dans les sections de paroi intermédiaire, à travers les orifices de passage (39) alignés, et ensuite seulement, la brochette est déplaçable à travers les chambres de chargement (17) de façon déportée au moins partiellement.

17. Dispositif selon l'une quelconque des revendications 1 à 16, **caractérisé en ce que** l'épaisseur des parois de chambre (21) correspond à la distance axiale libre entre les aliments embrochés sur les brochettes.
